# EUROPEAN PATENT SPECIFICATION

(11) **EP 0 694 770 B1**
(45) Date of publication and mention of the grant of the patent: **12.01.2000**
(21) Application number: 95109974.6
(22) Date of filing: 27.06.1995
(51) Int. Cl.: G01J 5/60

(54) **A method for monitoring a fluid flow cross section**
Verfahren zur Überwachung der Strömung eines Fluidums
Procédé de contrôle de l'écoulement d'un fluide

(30) Priority: 29.06.1994 DE 4422413
(43) Date of publication of application: 31.01.1996
(73) Proprietor: ORFEUS Combustion Engineering GmbH, 22453 Hamburg (DE)
(72) Inventor: Wintrich, Franz; Dipl.-Ing., D-45130 Essen (DE); Wintrich, Hartmut; Dipl.-Ing., D-45309 Essen (DE)
(74) Representative: Sparing, Rolf Klaus, Dipl. Wirtsch.-Ing.

(56) References cited:
- EP-A- 0 168 235
- EP-A- 0 593 413
- GB-A- 2 183 029
- US-A- 5 168 528
- PATENT ABSTRACTS OF JAPAN vol. 014 no. 410 (M-1020) ,5 September 1990 & JP-A-02 157502 (HITACHI LTD) 18 June 1990,

## Description

The present invention relates to a method for monitoring a cross section through which a fluid flows wherein radiation emanating from the fluid or absorbed by the fluid is measured and processed.

The term "monitoring", as used herein, shall mean that parameters of the observed flow are to be obtained, the further processing of the parameters and the purposes of such processing not being an object of the present invention. Nevertheless, as an example hot combustion gases flowing in flues of a steam generator are mentioned, the flue cross section being monitored, and the parameters so obtained are used to optimize the heat transfer from the gases to the flue walls.

EP-A-593 413 discloses a device for monitoring combustion events in an internal combustion engine. Juxtaposed light guide fibers are connected to a processing unit, and although the document is silent as to the reading technique of the optical signals (serially or in parallel, whether or not in real time) it is to be assumed that such reading is done in parallel. By using tomographic techniques stored signals may be combined in accordance with known algorithms. Hence, this document discloses the features mentioned in the preamble of patent claim 1.

It would be desirable to detect three parameters of e.g. a combustion, two of them -- the temperature field and the combustion kinetics -- varying relatively slowly in relation to the serial reading of sensor arrays usually proposed for this purpose, radiation detected by the camera being spectrally dispersed in front of the array.

It is the object of the present invention to provide a method permitting real time acquisition of temperature, kinetics, and fluctuation of e.g. a combustion event. The invention is defined by claim 1, claims 2 and 3 defining alternative implementations of the method.

By correlating the outputs of sensor row and sensor array, very useful information may be gained with respect to the monitored section.

The attached drawings illustrate schematically apparatuses for implementing the method of the invention. It is further to be noted that tomographic techniques may be used to combine data from, say, two cameras.

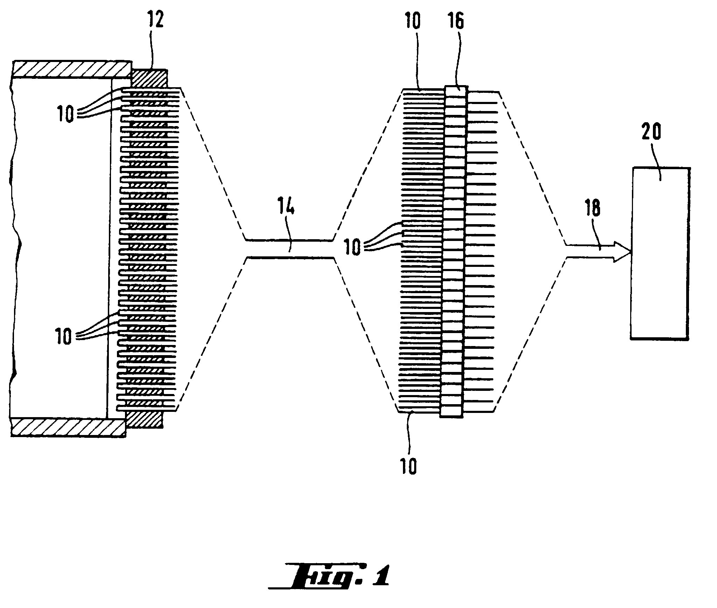

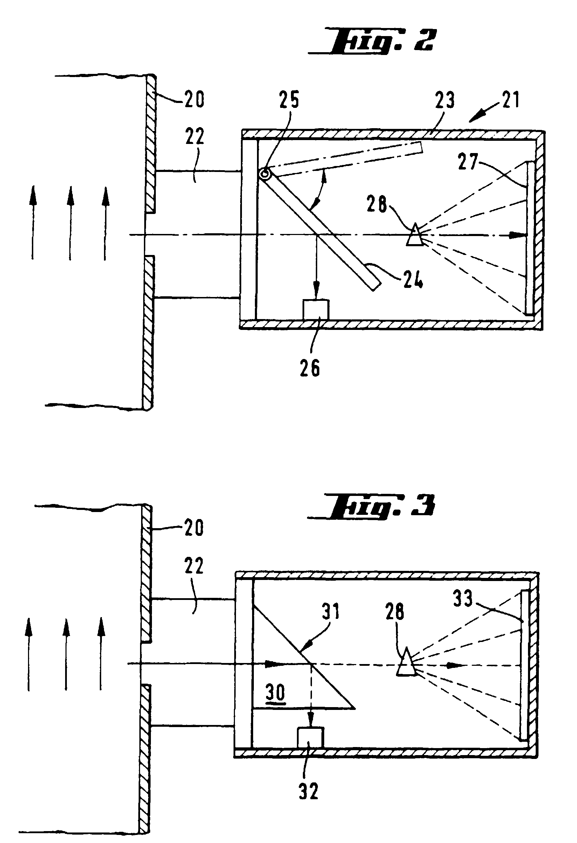

Fig. 1 shows a portion cf the apparatus for acquiring the fluctuation informaton, and Fig. 2 and 3 show respectively cameras for acquiring all three desired informations.

Referring first to Fig. 1, instead of deviating a portion of the radiation behind the lens, a given number of light guiding fibres 10, say thirty-two, is disposed in a row behind the inlet aperture of the camera and retained by means of a support 12. Via bus 14 formed by the thirty-two fibres the light is transmited to a sensor row 16 comprising (of course) thirty-two sensors read in parallel fashion via bus 18. Processing occurs in real time by means of apparatus 20 which is not further explained as it does not form part of the present invention.

The embodiment illustrated is compact, easy to cool, and may be made at low cost.

Fig. 2 illustrates in section a flue channel 20 having a lateral aperture in which a camera 21 is mounted. The front portion 22 of the camera includes the lenses producing an image of the flue channel section to be monitored. Within camera housing 23, a mirror 24 is mounted pivotable about a pivot axis 25. With the mirror in the position shown in solid lines, the image-forming light from the lenses is deflected onto sensor row 26 while in the position indicated in dash-dotted lines the light will pass onto sensor array 27, a spectral disperser 28, e.g. a prism being disposed in front of the array. Drive means (not shown) provide for oscillation of the mirror between its two positions.

It is to be noted that the image formed by the camera lenses is substantially "one-dimensional", i.e. a "line" is produced representing the radiation emanating from (or absorbed by) the monitored section. Hence, the camera aperture is substantially slot-shaped. Hence, the sensor row 26 will receive all light from the camera aperture while the light "band" is spectrally dispersed for array 27, as indicated by the dotted lines.

The embodiment of Fig. 3 distinguishes over that of Fig. 2 in that the oscillating mirror is replaced with a beam splitter 30 having a semi-transparent, semi-reflective surrface 31 under an angle such that part of the light is passed onto the sensor row 32, the other part onto sensor array 33.

## Claims

1. A method for monitoring a cross section through which a fluid flows, the method including detection of one of radiation emanating from said fluid and radiation absorbed by said fluid, the method comprising the steps of:
forming an image of said cross section on a sensor row (16, 26, 32), and
reading in parallel signals produced by sensors forming said row,
whereby turbulences of said fluid flow represented by local fluctuations of said radiation are detected, characterized in that the method further comprises the steps of:
spectrally dispersing said radiation,
forming an image of said spectrally dispersed radiation on a sensor array (27, 33),
serially reading signals produced by sensors forming said sensor array, and
correlating signals of said sensor row and said sensor array.

2. The method set forth in claim 1 wherein radiation is alternatingly directed onto said sensor row (26) and said sensor array (27).

3. The method set forth in claim 1 wherein said radiation is splitted and resulting radiation fractions are simultaneously directed onto said sensor row (32) and said sensor array (33).

## Patentansprüche

1. Verfahren zum Überwachen eines fluiddurchströmten Querschnitts, umfassend die Erfassung einer von dem Fluid ausgehenden oder von dem Fluid absorbierten Strahlung, welches Verfahren die Schritte umfaßt:
Bilden einer Abbildung des Querschnitts auf einer Sensorzeile (16, 26, 32), und
Paralleles Auslesen der von den die Zeile bildenden Sensoren erzeugten Signale,
wodurch Turbulenzen der Fluidströmung, repräsentiert durch lokale Fluktuationen der Strahlung, erfaßt werden,
dadurch gekennzeichnet, daß das Verfahren ferner die Schritte umfaßt:
Spektralzerlegung der Strahlung,
Herstellen einer Abbildung der spektralzerlegten Strahlung auf einer Sensormatrix (27, 33),
Serielles Auslesen der von den die Matrix bildenden Sensoren erzeugten Signale, und
Korrelieren der Signale der Sensorzeile und der Sensormatrix.

2. Verfahren nach Anspruch 1, bei dem die Strahlung alternierend auf die Sensorzeile (26) auf und die Sensormatrix (27) gelenkt wird.

3. Verfahren nach Anspruch 1, bei dem die Strahlung geteilt wird und die sich ergebenden Strahlungsteile simultan auf die Sensorzeile (32) und auf die Sensormatrix (33) gelenkt werden.

## Revendications

1. Procédé de surveillance d'une section transversale à travers laquelle s'écoule un fluide, le procédé comprenant la détection de l'un du rayonnement émanant dudit fluide et du rayonnement absorbé par ledit fluide, le procédé comprenant les étapes consistant à :
former une image de ladite section transversale sur une rangée de capteurs (**16, 26, 32**), et
lire en parallèle des signaux produits par les capteurs formant ladite rangée,
de sorte que des turbulences dudit écoulement de fluide représentées par des fluctuations locales dudit rayonnement sont détectées, caractérisé en ce que le procédé comprend de plus les étapes consistant à :
effectuer une dispersion spectrale dudit rayonnement,
former une image dudit rayonnement dispersé spectralement sur un réseau de capteurs (**27, 33**),
lire en série des signaux produits par des capteurs formant ledit réseau de capteurs, et
corréler les signaux de ladite rangée de capteurs et dudit réseau de capteurs.

2. Procédé selon la revendication 1, dans lequel le rayonnement est envoyé en alternance sur ladite rangée de capteurs (**26**) et sur ledit réseau de capteurs (**27**).

3. Procédé selon la revendication 1, dans lequel le rayonnement est divisé et les fractions de rayonnement en résultant sont envoyées simultanément sur ladite rangée de capteurs (**32**) et sur ledit réseau de capteurs (**33**).
